# EUROPÄISCHE PATENTSCHRIFT

(11) **EP 2 651 997 B1**
(45) Veröffentlichungstag und Bekanntmachung des Hinweises auf die Patenterteilung: **12.08.2015**
(21) Anmeldenummer: 11796682.0
(22) Anmeldetag: 12.12.2011
(51) Int. Cl.: C08G 18/48, C08G 18/50, C08G 18/79, C08J 9/04, C08J 9/14, C08G 18/02, C08L 101/00, C08G 101/00

(54) **HOCHTEMPERATURBESTÄNDIGE SCHAUMSTOFFE**
FOAMS OF HIGH THERMAL STABILITY
MOUSSES RÉSISTANTES AUX TEMPÉRATURES ÉLEVÉES

(30) Priorität: 15.12.2010 DE 102010063104
(43) Veröffentlichungstag der Anmeldung: 23.10.2013
(73) Patentinhaber: Bayer Intellectual Property GmbH, 40789 Monheim (DE)
(72) Erfinder: WEGENER, Dirk, 40789 Monheim (DE); REITER, Stephan, 40764 Langenfeld (DE); RASSELNBERG, Harald, 41541 Dormagen (DE); SCHORNSTEIN, Marcel, 41462 Neuss (DE); ARNTZ, Hans-Detlef, 53797 Lohmar (DE); BRÜNING, Dirk, 51377 Leverkusen (DE)
(74) Vertreter: BIP Patents
(86) Internationale Anmeldenummer: PCT/EP2011/072481
(87) Internationale Veröffentlichungsnummer: WO 2012/080185

(56) Entgegenhaltungen:
- EP-A1- 0 476 337
- EP-A1- 1 435 366
- DE-A1- 3 938 062
- US-A- 5 721 285
- US-A- 5 770 635

## Beschreibung

Die vorliegende Erfindung betrifft hochtemperaturbeständige Schaumstoffe und deren Herstellung durch Umsetzung von Reaktionsgemischen (= A-Zustand) aus organischen Polyisocyanaten und organischen Polyepoxiden durch Zugabe von Treibmitteln und die Isocyanat/Epoxid-Reaktion beschleunigenden Katalysatoren in den endgültigen geschäumten nicht mehr schmelzbaren C-Zustand sowie deren Verwendung.

Die Reaktionsgemische (= A-Zustand) aus organischen Polyisocyanaten und organischen Polyepoxiden können gemäß dem Stand der Technik durch alkylierend wirkende Stopper stabilisiert werden. Auch können die organischen Polyisocyanate vor dem Vermischen mit organischen Polyepoxiden durch Zugabe von Katalysatoren und Stoppern zu einem Isocyanuratgruppen aufweisenden Zwischenprodukt umgesetzt werden. Die Umsetzung der organischen Polyisocyanate zu einem Isocyanuratgruppen aufweisenden Zwischenprodukt kann auch nach dem Vermischen mit den organischen Polyepoxiden erfolgen. In diesem Fall werden die hochtemperaturbeständigen Schaumstoffe durch Umsetzung von Reaktionsgemischen (= A-Zustand) aus organischen Polyisocyanaten, organischen Polyepoxiden, Katalysatoren und Stoppern zu einem intermediären lagerstabilen höherviskosen B-Zustand und der Umsetzung dieses höherviskosen B-Zustandes durch Zugabe von Treibmitteln und einem die Isocyanat/Epoxid-Reaktion spontan beschleunigenden Katalysator in den endgültigen geschäumten nicht mehr schmelzbaren C-Zustand erhalten.

Nach DE 39 38 062 A1 gelingt die Herstellung von hochtemperaturbeständigen Schaumstoffen durch Umsetzung von Reaktionsgemischen (= A-Zustand) aus organischen Polyisocyanaten, organischen Polyepoxiden, Katalysatoren und Stoppern zu einem intermediären lagerstabilen höherviskosen B-Zustand und der Umsetzung dieses höherviskosen B-Zustandes durch Zugabe von chemischen und/oder physikalischen Treibmitteln und einem die Isocyanat/Epoxid-Reaktion beschleunigenden Katalysator ohne Wärmezufuhr in den endgültigen geschäumten nicht mehr schmelzbaren C-Zustand. Es wird angeführt, dass es äußerst überraschend und für Fachleute nicht vorhersehbar war, dass nach dieser Verfahrensweise hochtemperaturbeständige Schaumstoffe erhalten werden können, und zwar unter Verwendung von verschiedensten Treibmitteln. Als chemische Treibmittel werden Wasser und Phospholinoxid genannt, als physikalische Treibmittel leicht siedende, inerte, organische Flüssigkeiten wie Pentan, Butan, Hexan und Fluorchlorkohlenwasserstoffe.

Gemäß EP-A-0 272 563 gelingt die zweistufige Herstellung von Formkörpern durch Umsetzung eines lagerstabilen B-Zustandes durch Zugabe von latenten, durch Wärme aktivierbaren Katalysatoren. In dieser Veröffentlichung findet sich der Hinweis, dass es denkbar wäre, die im B-Zustand befindlichen Harze in Kombination mit Treibmitteln zur Herstellung von Schaumstoffen zu verwenden. Es findet sich aber kein Hinweis darauf, in welcher Form die Verschäumung vorgenommen werden soll und welche Treibmittel eingesetzt werden sollen.

Aus EP-A-0 296 052 geht hervor, dass man hochtemperaturbeständige Schaumstoffe aus Mischungen von Diisocyanaten und Bisepoxiden in Gegenwart von porösen, expandierten oder dispergierten Materialien erhalten kann. Ohne den Zusatz von porösen Partikeln lassen sich die angegebenen Ausgangsmischungen nicht zu einem Schaumstoff verarbeiten.

Nach EP 0 331 996 können lagerstabile Isocyanat-Epoxid-Gemische hergestellt werden. Diese Reaktionsharzmischungen sind u.a. zur Herstellung von Elektroisolierstoffen, Transformatoren, Kondensatoren oder Konstruktionswerkstoffen geeignet. Es wird angeführt, dass im Falle der Verarbeitung der Gemische in Kombination mit Treibmitteln auch die Herstellung von Schaumstoffen hoher Wärmeformbeständigkeit denkbar wäre. Es findet sich aber kein Hinweis, unter welchen Bedingungen und mit welchen Treibmitteln die Verschäumung vorgenommen werden soll.

In US 4,699,931 wird die Herstellung von Oxazolidinonstrukturen enthaltenden Isocyanuratschäumen durch Reaktion von Polyisocyanaten mit Polyepoxiden unter Mitverwendung von Katalysatoren, Treibmitteln und oberflächenaktiven Substanzen beschrieben. Zur Herstellung der Schäume werden Wasser oder halogenierte Kohlenwasserstoffe, wie z.B. Difluorchlormethan, Trichlorfluormethan, Dichlordifluormethan, Chlortrifluormethan, Trichlortrifluorethan, Dichlorfluorethan, Difluortrichlorethan, Tribromchlorfluorbutan und Methylenchlorid und Mischungen daraus beschrieben.

In US 3 793 236 werden Oxazolidinonstrukturen enthaltende Isocyanuratschäume offenbart, die aus Oxazolidinon-Gruppen aufweisenden Prepolymeren hergestellt werden. Zur Herstellung der Schäume werden anorganische Treibmittel, wie z.B. Wasser und Borsäure, beschrieben, Kohlenwasserstoffe, wie z.B. Pentan, Hexan und Heptan, halogenierte Kohlenwasserstoffe, wie z.B. Trichlorfluormethan, und reaktive organische Treibmittel, wie z.B. Nitroalkane, Aldoxime, Säureamide, enolisierbare Carbonylverbindungen und Nitroharnstoff..

In US 3 849 349 werden mit Polyol modifizierte Oxazolidinonstrukturen enthaltende Isocyanuratschäume beschrieben, die im Gegensatz zu dem in US 3 793 236 beschriebenen Verfahren nach dem one-shot-Verfahren direkt aus Polyisocyanat, Polyepoxid und Polyol hergestellt werden. Die beschriebenen Treibmittel entsprechen den in US 3 793 236 offenbarten Treibmitteln.

In US 4 129 695 wird die Herstellung von Schäumen aus Polyisocyanaten und Polyepoxiden beschrieben, wobei die Schäume Oxazolidinon- und Carbodiimid-Gruppen aufweisen. Bei der Umsetzung von Isocyanat-Gruppen zu Carbodiimid-Strukturen wird CO₂ freigesetzt, das als Treibmittel dient. Als mögliche zusätzliche Treibmittel werden Wasser, Butan, Pentan, Trifluorchlormethan, Dichlordifluormethan und Chlorfluorethane genannt.

Gemäß US 3 242 108 gelingt die Herstellung von Schäumen aus Polyisocyanaten, Polyepoxiden und Komponenten mit aktiven H-Atomen. Als Treibmittel werden Wasser und niedrig siedende Lösungsmittel, wie z.B. Benzol, Toluol, Aceton, Ethylether, Butylacetat, Methylenchlorid, Tetrachlorkohlenstoff, Hexan und Styrol beschrieben. Als Treibmittel können auch solche eingesetzt werden, die sich in der Hitze unter Gasentwicklung zersetzen, wie z.B. Ammoniumcarbonat, Natriumbicarbonat, N,N'-Dimethyl-N,N'-dinitrosoterephthalamid, para,para'-Oxybis(benzol-sulfonyl-hydrazid), Azodicarbonamid, Benzolsulfonylhydrazid, Diazoaminobenzol, Azodiisobutyronitril, Dinitrosopentamethylentetramin und para-tert.-Butylbenzoylazid.

Der Erfindung lag die Aufgabe zugrunde, hochtemperaturbeständige Schaumstoffe mit sehr guten mechanischen Eigenschaften zur Verfügung zu stellen, die in einfacher Verfahrensweise herstellbar sind, so dass sie in einer industriellen Fertigung in kurzen Formbelegungszeiten produziert werden können.

Wie im Stand der Technik beschrieben, haben Treibmittel keinen herausragenden Einfluß auf die Qualität der damit hergestellten hochtemperaturbeständigen Schaumstoffe. Insbesondere wird in DE 39 38 062 A1 ausgeführt, dass nach der in dieser Schrift beschriebenen Verfahrensweise hochtemperaturbeständige Schaumstoffe erhalten werden können, und zwar gleichermaßen mit sehr unterschiedlichen Treibmitteln.

Es war daher äußerst überraschend und nicht vorhersehbar, dass mit der Verwendung von Ameisensäure als Treibmittel hochtemperaturbeständige Schaumstoffe erhalten werden können, deren mechanische Eigenschaften diejenigen der nach dem Stand der Technik hergestellten Schäume deutlich übertreffen.

Mit Ameisensäure können hochtemperaturstabile Schäume mit niedrigen Rohdichten, erstaunlich geringer Sprödigkeit und hoher Druckfestigkeit hergestellt werden. Dies ist völlig überraschend, da zum Einen Ameisensäure wie beispielsweise auch Wasser als Treibmittel zur Bildung von Harnstoff-Gruppen führt, die wiederum bekanntermaßen zur Versprödung des Materials führen. Zum Anderen sollte Ameisensäure aufgrund des intrinsischen Säure-Charakters die üblicherweise eingesetzten Amin-Katalysatoren blockieren. Überraschenderweise wurde aber genau das Gegenteil gefunden, nämlich ein optimales Verhältnis der Geschwindigkeiten von Schäum- und Vernetzungsreaktion.

Gegenstand der Erfindung sind hochtemperaturbeständige Schaumstoffe erhältlich durch Umsetzung von
a) mindestens einem organischen Polyisocyanat mit
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
e) gegebenenfalls in Gegenwart von Hilfs- und Zusatzstoffen
   dadurch gekennzeichnet, dass die Umsetzung in Gegenwart von Ameisensäure als Treibmittel und gegebenenfalls weiteren chemischen und/oder physikalischen Treibmitteln T) und einem die Isocyanat/Epoxid-Reaktion beschleunigenden Katalysator f) erfolgt.
   Besonders bevorzugt erfolgt die Umsetzung in Gegenwart
d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus.

Ein weiterer Gegenstand der Erfindung ist ein Verfahren zur Herstellung der erfindungsgemäßen hochtemperaturbeständigen Schaumstoffe durch Umsetzung von
a) mindestens einem organischen Polyisocyanat mit
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
e) gegebenenfalls in Gegenwart von Hilfs- und Zusatzstoffen
   dadurch gekennzeichnet, dass die Umsetzung in Gegenwart von Ameisensäure als Treibmittel und gegebenenfalls weiteren chemischen und/oder physikalischen Treibmitteln T) und einem die Isocyanat/Epoxid-Reaktion beschleunigenden Katalysator f) unter Aufschäumen durchgeführt wird.

Besonders bevorzugt wird das Verfahren zur Herstellung der erfindungsgemäßen hochtemperaturbeständigen Schaumstoffe so durchgeführt, dass die Umsetzung in Gegenwart
d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus durchgeführt wird.

In einer bevorzugten Ausführungsform wird das Verfahren zur Herstellung der erfindungsgemäßen hochtemperaturbeständigen Schaumstoffe durch
(i) Reaktion von
   a) mindestens einem organischen Polyisocyanat in Gegenwart
   c) eines tertiären Amins als Katalysator zu einem Isocyanuratgruppen aufweisenden Zwischenprodukt, und
(ii) Abbruch der Reaktion unter Schritt (i) bei einer Umsetzung von maximal 60% der Isocyanatgruppen des Isocyanates a) durch Zugabe einer der Aminmenge c) mindestens äquivalenten Menge
   d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus und
(iii) Mischen des unter (ii) erhaltenen Produktes mit
   b) mindestens einer, mindestens zwei Epoxidgruppen aufweisenden organischen Verbindung in einer solchen Menge, die einem Äquivalentverhältnis von anfänglich eingesetzten Isocyanatgruppen zu Epoxidgruppen von 1,2 : 1 bis 500 : 1 entspricht, e) gegebenenfalls in Gegenwart von Hilfs- und Zusatzstoffen durchgeführt, wobei die unter (iii) erhaltene Mischung durch
(iv) Zugabe von Ameisensäure als Treibmittel und gegebenenfalls weiteren chemischen und/oder physikalischen Treibmitteln T) und einem die Isocyanat/Epoxid-Reaktion beschleunigenden Katalysator f) unter Aufschäumen in den geschäumten Zustand überführt wird.

In einer besonderen Ausführungsform wird das Verfahren zur Herstellung der erfindungsgemäßen hochtemperaturbeständigen Schaumstoffe durch
(i) Mischen von
   a) mindestens einem organischen Polyisocyanat und
   b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
(ii) Reaktion der Mischung durch Zugabe
   c) eines tertiären Amins als Katalysator zu einem Zwischenprodukt, und
(iii) Abbruch der Reaktion bei einer Umsetzung von maximal 60% der Isocyanatgruppen des Isocyanates a) durch Zugabe einer der Aminmenge c) mindestens äquivalenten Menge
   d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus, so dass ein intermediärer stabiler B-Zustand des Viskositätsbereichs von 1500 bis 20000 mPas bei 25°C erhalten wird,
   e) gegebenenfalls in Gegenwart von Hilfs- und Zusatzstoffen, wobei die unter (iii) erhaltene Mischung durch
(iv) Zugabe von Ameisensäure als Treibmittel und gegebenenfalls weiteren chemischen und/oder physikalischen Treibmitteln T) und einem die Isocyanat/Epoxid-Reaktion beschleunigenden Katalysator f) unter Aufschäumen in den geschäumten Zustand überführt wird.

Besonders bevorzugt wird Ameisensäure als alleiniges Treibmittel eingesetzt.

Nach dem Aufschäumen in den geschäumten Zustand kann vorzugsweise eine nachträgliche Temperaturbehandlung zwischen 70 und 250°C durchgeführt werden.

Ein weiterer Gegenstand der Erfindung ist die Verwendung der erfindungsgemäßen hochtemperaturbeständigen Schaumstoffe, gegebenenfalls nach Temperung, als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und -außenbauteilen, zur Herstellung von Dämmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

Ein weiterer Gegenstand der Erfindung ist die Verwendung der schaumfähigen Mischungen vor dem Ende der Verschäumung zum erfindungsgemäßen hochtemperaturbeständigen Schaumstoff zum Verkleben von Substraten, zum Verkleben von Stahl- und Kupferblechen, Kunststoffplatten und Polybutylenterephthalat-Platten.

Ein weiterer Gegenstand der Erfindung sind Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug-und Raketenbau, Flugzeuginnen- und -außenbauteile, Dämmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, welche dadurch gekennzeichnet sind, daß sie die erfindungsgemäßen hochtemperaturbeständigen Schaumstoffe enthalten oder aus ihnen bestehen.

Ein weiterer Gegenstand der Erfindung sind Verklebungen von Substraten, Verklebungen von Stahl- und Kupferblechen, Kunststoffplatten und Polybutylenterephthalat-Platten, welche dadurch gekennzeichnet sind, dass sie die erfindungsgemäßen hochtemperaturbeständigen Schaumstoffe enthalten oder aus ihnen bestehen.

Bei der Isocyanatkomponente a) handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ,

in der
- n =: 2-4, vorzugsweise 2, und
Q einen aliphatischen Kohlenwasserstoffrest mit 2-18, vorzugsweise 6-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3 -diisocyanat, Cyclohexan-1,3- und -1,4-diisocyanat sowie beliebige Gemische dieser Isomeren. 1-Isocyanato-3,3,5-trimethyl-5-isocyanatomethylcyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonyl-isocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE-PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-%, vorzugsweise von 30 bis 70 Gew.-%. Neben dieser 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin-Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DE-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Bei der Epoxidgruppen enthaltenden Komponente b) handelt es sich um beliebige, mindestens zwei Epoxidgruppen aufweisende aliphatische, cycloaliphatische, aromatische oder heterocyclische Verbindungen. Die bevorzugten als Komponente b) geeigneten Epoxide weisen pro Molekül 2 bis 4, vorzugsweise 2 Epoxidgruppen und ein Epoxidäquivalentgewicht von 90 bis 500 g/eq, vorzugsweise 170 bis 220 g/eq auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylpropan (Bisphenol A), von 4,4'-Dihydroxy-3,3'-dimethyldiphenylmethan, von 4,4'-Dihydroxydiphenylmethan (Bisphenol F), 4,4'-Dihydroxydiphenylcyclohexan, von 4,4'-Dihydroxy-3,3'-dimethyl-diphenylpropan, von 4,4'-Dihydroxydiphenyl, aus 4,4'-Dihydroxydiphenylsulfon (Bisphenol S), von Tris-(4-hydroxyphenyl)-methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylesters erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N,N-Diepoxypropyl-4-amino-phenyl-glycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Isophthalsäurediglycidylester, Terephthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen oder Hexahydrophthalsäurediglycidylester, die gegebenenfalls mit Methylgruppen substituiert sein können.

Glycidylether mehrwertiger Alkohole, beispielsweise von 1,4-Butandiol (Araldite® DY-D, Huntsman), 1,4-Butendiol, Glycerin, Trimethylolpropan (Araldite® DY-T/CH, Huntsman), Pentaerythrit und Polyethylenglykol können ebenfalls verwendet werden. Von weiterem Interesse sind Triglycidylisocyanurat, N,N'-Diepoxypropyloxyamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich können auch Epoxidierungsprodukte von mehrfach ungesättigten Verbindungen eingesetzt werden, wie vegetabilischen Ölen und deren Umwandlungsprodukten. Epoxidierungsprodukte von Di- und Polyolefinen, wie Butadien, Vinylcyclohexan, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten, können ebenfalls verwendet werden.

Außerdem können auch Polymerisate von ungesättigten Monoepoxiden eingesetzt werden, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A (Ruetapox® 0162, Bakelite AG; Epikote® Resin 162, Hexion Specialty Chemicals GmbH; Eurepox 710, Brenntag GmbH); Polyepoxidverbindungen auf der Basis von aromatischen Aminen, insbesondere Bis(N-epoxypropyl)anilin, N,N'-Dimethyl-N,N'-diepoxypropyl-4,4'-diaminodiphenylmethan und N,N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan; 3,4-Epoxycyclohexylmethan-3,4-epoxycyclohexan-carboxylat.

Flüssige Polyepoxide oder niedrigviskose Diepoxide, wie Bis-(N-epoxypropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2 : 1 bis 500 : 1, vorzugsweise 3 : 1 bis 65 : 1, insbesondere 3 : 1 bis 30 : 1, besonders bevorzugt 3 : 1 bis 10 : 1, ganz besonders bevorzugt 4 : 1 bis 7 : 1 entspricht.

Bei der Katalysatorkomponente c) handelt es sich um beliebige mono- oder polyfunktionelle organische Amine mit tertiären Aminogruppen. Geeignete Amine der genannten Art weisen im Allgemeinen ein Molekulargewicht von bis zu 353, vorzugsweise von 101 bis 185 auf. Bevorzugt sind solche tertiären Amine, die bei der Reaktionstemperatur der ersten Reaktionsstufe flüssig sind. Typische Beispiele geeigneter Amine sind Triethylamin, Tri-n-butylamin, Dimethylcyclohexylamin, N,N,N',N'-Tetramethylethylendiamin, N,N-Dimethylbenzylamin, Triethylendiamin oder Dimethyloctylamin, N-Methylmorpholin und Bis-(N,N-dimethylaminoethyl)-ether, bevorzugt ist N,N-Dimethylbenzylamin.

Die Katalysatoren c) werden in einer Menge von 0,01 bis 2, vorzugsweise 0,01 bis 0,1 Gew.-%, bezogen auf das Gesamtgewicht der Komponente a) und b), eingesetzt.

Bei den Stabilisatoren d) (auch als "Stopper" bezeichnet) handelt es sich um sogenannte Katalysatorengifte für die Katalysatoren c). Geeignet sind beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester, wie n-Butansulfonsäuremethylester, n-Perfluorbutansulfonsäuremethylester oder n-Hexansulfonsäureethylester, als auch aromatische Sulfonsäurealkylester, wie Benzolsulfonsäuremethylester, - ethylester oder -n-butylester, p-Toluolsulfonsäuremethylester, -ethylester oder -n-butylester, 1-Naphthalinsulfonsäuremethylester, 3-Nitrobenzolsulfonsäuremethylester oder 2-Naphthalinsulfon-säuremethylester. Die genannten aromatischen Sulfonsäureester sind bevorzugt. Besonders bevorzugt wird p-Toluolsulfonsäuremethylester als Komponente d) verwendet. Ebenfalls geeignet jedoch weniger bevorzugt sind Methyljodid und Dimethylsulfat als Komponente d), ebenso Benzolsulfonsäureanhydrid, Benzolsulfonsäurechlorid, Benzolsulfonsäure, Trimethylsilyltrifluormethansulfonat sowie das Reaktionsprodukt der Umsetzung von Benzolsulfonsäure mit Epoxiden, bevorzugt Phenoxypropylenoxid.

Die Komponente d) wird mindestens in einer solchen Menge verwendet, die den tert.-Aminstickstoffatomen der Komponente c) äquivalent ist.

Zusätzlich zu Ameisensäure kommen als chemische Treibmittel T) Wasser und/oder Phospholinoxid in Frage. Als physikalische Treibmittel T) werden Kohlenwasserstoffe wie Pentan, Butan, Hexan, Fluor-Kohlenstoffe oder Fluor-Kohlenwasserstoffe eingesetzt.

In einer besonders bevorzugten Ausführungsform stellt Ameisensäure das alleinige Treibmittel dar.

Erfindungsgemäß können bevorzugt als Katalysatoren f) neben den unter c) beschriebenen tert.-Aminen auch beliebige Gemische dieser genannten Aminverbindungen sowie z.B. Pentamethyl-diethylentriamin, N-Methyl-N'-dimethylaminoethyl-piperazin, N,N-Diethylethanolamin sowie Silamorpholin eingesetzt werden.

Zu den geeigneten Aminen zählen auch solche, die neben der Katalysewirkung auch eine Treibwirkung besitzen. In diesem Falle agiert die Katalysatorkomponente f) gleichzeitig auch als Treibmittel T.

Bevorzugt als Katalysatoren f) sind insbesondere Dimethylbenzylamin, Methyldibenzylamin, Bortrichlorid-tert. -Amin-Addukte sowie N-[3-(Dimethylamino)propyl]formamid.

Bevorzugte Hilfs- und Zusatzmittel e) sind die bekannten Schaumstoffstabilisatoren vom Typ der Polyethersiloxane, Formtrennmittel, z.B. Polyamidwachse und/oder Stearinsäurederivate und/oder natürliche Wachse, z.B. Carnaubawachs.

Bei den gegebenenfalls mitzuverwendenden Hilfs- und Zusatzmitteln e) handelt es sich beispielsweise e1) um mindestens 2, insbesondere 2 bis 8 und vorzugsweise 2 bis 3 alkoholische Hydroxylgruppen aufweisende organische Verbindungen des Molekulargewichtsbereichs 62 bis 8000, wie sie als Aufbaukomponente für Polyurethan an sich bekannt sind. Beispiele sind einfache mehrwertige Alkohole wie Ethylenglykol, Hexadiol-1,6, Glycerin oder Trimethylolpropan, Dimethylsiloxan-Einheiten aufweisende Polyole, z.B. Bis-(dimethylhydroxymethyl-silyl)ether; Estergruppen aufweisende Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxylpolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminische NH-Bindungen zugänglich sind; Mehrwertige Amine wie z.B. Diethyltoluylendiamin (DETDA) und Polyetherpolyamine.

Die Zusatzmittel e1) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen und/oder Aminogruppen der Komponente e1), von mindestens 2 : 1, vorzugsweise mindestens 2,5 : 1 entspricht. In jedem Fall muß die Menge der Komponente a) so bemessen sein, daß das Äquivalentverhältnis von Isocyanatgruppen der Komponente a) zur Summe der Epoxidgruppen der Komponente b), Hydroxylgruppen und/oder Aminogruppen der Komponente e1) und den gegebenenfalls in der Komponente b) vorliegenden Hydroxylgruppen mindestens bei 1,2 : 1, vorzugsweise 3 : 1 bis 65 : 1, insbesondere 3 : 1 bis 30 : 1, besonders bevorzugt 3 : 1 bis 10 : 1, ganz besonders bevorzugt 4 : 1 bis 7 : 1 liegt.

Weitere, gegebenenfalls mitzuverwendende Hilfs- und Zusatzmittel e) sind e2) polymerisierbare, olefinisch ungesättigte Monomere, die in Mengen von bis zu 100 Gew.-%, vorzugsweise bis zu 50 Gew.-%, insbesondere bis zu 30 Gew.-%, bezogen auf das Gesamtgewicht der Komponenten a) und b) zum Einsatz gelangen können.

Typische Beispiele von Zusatzmitteln e2) sind olefinisch ungesättigte Monomere, die keine gegenüber NCO-Gruppen reaktive Wasserstoffatome aufweisen, wie z.B. Diisobutylen, Styrol, C₁-C₄-Alkylstyrole, wie α-Methylstyrol, α-Butylstyrol, Vinylchlorid, Vinylacetat, Maleinimidderivate wie z.B. Bis-(4-maleinimido-phenyl)-methan, Acrylsäure-C₁-C₈-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-C₁-C₄-alkylester verwendet, vorausgesetzt, die Zusatzmittel e2) werden überhaupt eingesetzt.

Bei Mitverwendung von Zusatzmitteln e2) ist die Mitverwendung von klassischen Polymerisationsinitiatoren wie z.B. Benzoylperoxid möglich, im Allgemeinen jedoch nicht erforderlich.

Die Mitverwendung von Hilfs- und Zusatzmitteln e1) bzw. e2) ist im Allgemeinen nicht erforderlich. Die unter e1) beispielhaft genannten Zusatzmittel sind im übrigen gegenüber den unter e2) beispielhaft genannten Verbindungen bevorzugt. Grundsätzlich ist es auch möglich, gleichzeitig beide Arten von Hilfs- und Zusatzmitteln mitzuverwenden.

Weitere gegebenenfalls mitzuverwendende Hilfs- und Zusatzmittel e) sind beispielsweise e3) Füllstoffe wie z.B. Quarzmehl, Kreide, Microdol, Aluminiumoxid, Siliciumcarbid, Graphit oder Korund; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie Methacrylsäure, β-Hydroxypropylester, Maleinsäure- und Fumarsäureester; Flammschutz verbessernde Substanzen wie Exolith oder Magnesiumoxid; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "Liquid Crystal"). Weiterhin kommen als Füllstoffe metallische Füllstoffe in Betracht, wie Aluminium, Kupfer, Eisen und/oder Stahl. Die metallischen Füllstoffe werden insbesondere in körniger Form und/oder Pulverform eingesetzt.

Weitere gegebenenfalls mitzuverwendende Hilfs- und Zusatzmittel e) sind beispielsweise e4) olefinisch ungesättigte Monomere mit gegenüber NCO-Gruppen reaktiven Wasserstoffatomen wie z.B. Hydroxyethyl-methacrylat, Hydroxypropyl-methacrylat und Aminoethylmethacrylat.

Die Hilfs- und Zusatzmittel e) können sowohl den Ausgangsmaterialien a) und b) vor der Durchführung des erfindungsgemäßen Verfahrens einverleibt als auch erst später zugemischt werden.

Zur Durchführung des erfindungsgemäßen Verfahrens können die Ausgangsmaterialien a) und b) miteinander vermischt werden. Dem Reaktionsgemisch werden dann gegebenenfalls weitere Hilfs-und Zusatzmittel e), der Katalysator f), Ameisensäure und gegebenenfalls weitere Treibmittel T) zugesetzt, das Ganze innig vermischt und das schaumfähige Gemisch in eine offene oder geschlossene Form eingegossen.

Bei Verwendung eines aus der Polyurethan-Verarbeitung bekannten Mehrkomponenten-Mischkopfes zeichnet sich das Verfahren durch eine hohe Flexibilität aus. Durch Variation des

Mischungsverhältnisses der Komponenten a) und b) können mit ein und denselben Ausgangsmaterialien verschiedene Schaumstoff-Qualitäten hergestellt werden. Zusätzlich können auch verschiedene Komponenten a) und verschiedene Komponenten b) in unterschiedlichen Verhältnissen direkt in den Mischkopf gefahren werden. Die Hilfs- und Zusatzmittel e), der Katalysator f), Ameisensäure und gegebenenfalls weitere Treibmittel T) können separat oder als Batch in den Mischkopf gefahren werden. Möglich ist auch eine Dosierung der Hilfs- und Zusatzmittel e) zusammen mit dem Katalysator f) und eine separate Dosierung der Ameisensäure und gegebenenfalls weiterer Treibmittel T). Durch Variation der Menge an Ameisensäure und gegebenenfalls weiterer Treibmittel T) können Schäume mit verschiedenen Rohdichte-Bereichen hergestellt werden.

In einer speziellen Ausführungsform des erfindungsgemäßen Verfahrens wird durch Zugabe eines Stabilisators d) bei der Vermischung der Ausgangsmaterialien a) und b) und gegebenenfalls der Hilfs- und Zusatzmittel e) bzw. eines Teils hiervon ein stabiles Reaktionsgemisch erhalten. Dieses kann, gegebenenfalls nach beliebig langer Zwischenlagerung der zweiten Stufe des erfindungsgemäßen Verfahrens zugeführt werden. Hierzu werden dem stabilen Reaktionsgemisch gegebenenfalls weitere Hilfs- und Zusatzmittel e), der Katalysator f), Ameisensäure und gegebenenfalls weitere Treibmittel T) zugesetzt, das Ganze innig vermischt und das schaumfähige Gemisch in eine offene oder geschlossene Form eingegossen.

Dieses Verfahren ist besonders vorteilhaft, wenn das Mischungsverhältnis der Komponenten a) und b) nicht variiert werden soll. Es sind keine separaten Vorratsbehälter, Dosiereinrichtungen und Mischkopf-Zuführungen für die Komponenten a) und b) notwendig.

In einer weiteren speziellen Ausführungsform des erfindungsgemäßen Verfahrens können die Ausgangsmaterialien a) und c) und gegebenenfalls die Hilfs- und Zusatzmittel e) bzw. ein Teil hiervon miteinander vermischt werden und innerhalb des Temperaturbereichs von 20 bis 150°C, vorzugsweise 60 bis 130°C, zur Reaktion gebracht werden. Nach einem Umsatz von maximal 60%, vorzugsweise von 15 bis 30% der über die Komponente a) eingebrachten Isocyanatgruppen wird die Reaktion durch Zugabe des Stabilisators/Stoppers d) abgebrochen. Das hierbei anfallende stabile Zwischenprodukt kann, gegebenenfalls nach beliebig langer Zwischenlagerung mit der Komponente b) vermischt werden, wodurch ein bei Raumtemperatur flüssiger B-Zustand erhalten wird. Dieser kann, gegebenenfalls nach beliebig langer Zwischenlagerung der zweiten Stufe des erfindungsgemäßen Verfahrens zugeführt werden. Hierzu werden dem B-Zustand gegebenenfalls weitere Hilfs- und Zusatzmittel e), der Katalysator f), Ameisensäure und gegebenenfalls weitere Treibmittel T) zugesetzt, das Ganze innig vermischt und das schaumfähige Gemisch in eine offene oder geschlossene Form gegeben.

Dieses Verfahren bietet den Vorteil eines höherviskosen B-Zustandes zu Beginn der Schäumreaktion. Je nachdem, ob, und wenn ja, welche Hilfs- und Zusatzmittel e) zugesetzt werden, führt ein höherviskoser B-Zustand zu verbesserten Schaumeigenschaften. Das nachträgliche Vermischen der stabilen, teilumgesetzten Komponente a) mit der Komponente b) bietet den Vorteil einer hohen Flexibilität, da je nach Bedarf verschiedene Komponenten b) mit der teilumgesetzten Komponente a) zu verschiedenen stabilen B-Zuständen vermischt werden können.

In einer weiteren speziellen Ausführungsform des erfindungsgemäßen Verfahrens können die Ausgangsmaterialien a) bis c) und gegebenenfalls die Hilfs- und Zusatzmittel e) bzw. ein Teil hiervon miteinander vermischt und innerhalb des Temperaturbereichs von 20 bis 150°C, vorzugsweise 60 bis 130°C, zur Reaktion gebracht werden. Nach einem Umsatz von maximal 60%, vorzugsweise von 15 bis 30% der über die Komponente a) eingebrachten Isocyanatgruppen wird die Reaktion durch Zugabe des Stabilisators/Stoppers d) abgebrochen. Das hierbei anfallende Zwischenprodukt stellt bei Raumtemperatur einen flüssigen B-Zustand dar und kann, gegebenenfalls nach beliebig langer Zwischenlagerung der zweiten Stufe des erfindungsgemäßen Verfahrens zugeführt werden. Hierzu werden dem Zwischenprodukt (B-Zustand) gegebenenfalls weitere Hilfs- und Zusatzmittel e), der Katalysator f), Ameisensäure und gegebenenfalls weitere Treibmittel T) zugesetzt, das Ganze innig vermischt und das schaumfähige Gemisch in eine offene oder geschlossene Form eingegossen.

Dieses Verfahren bietet ebenfalls den Vorteil eines höherviskosen B-Zustandes zu Beginn der Schäumreaktion. Soll die Komponente b) nicht variiert werden, ist dieses Verfahren in bestimmten Fällen dem vorher beschriebenen vorzuziehen. Die in der Regel niedrigviskosen Komponenten a) und b) können leicht vermischt und daraus der höherviskose B-Zustand hergestellt werden. Die teilumgesetzte Komponente a) kann dagegen in Abhängigkeit von ihrer Natur und dem Grad der Umsetzung eine vergleichsweise hohe Viskosität aufweisen, was sowohl die Prozessführung bei der Teilumsetzung als auch das nachträgliche Vermischen mit der Komponente b) erschwert.

Je nach eingesetzten Komponenten beginnt der Treibvorgang im Allgemeinen nach einer Liegezeit von 10 s bis 6 min und ist in der Regel nach 2-12 min beendet. Die Schäume sind feinzellig und gleichmäßig.

Zwecks Erreichens optimaler Eigenschaften ist es vorteilhaft, nach dem Aufschäumen in den endgültigen geschäumten Zustand eine nachträgliche Temperaturbehandlung durchzuführen.

In einer bevorzugten Ausführungsform wird nach dem Aufschäumen in den endgültigen geschäumten Zustand eine nachträgliche Temperaturbehandlung zwischen 70 und 250°C, bevorzugt 120 und 250°C, besonders bevorzugt 180 und 220°C vorgenommen.

Bei Verwendung einer geschlossenen Form zur Herstellung der erfindungsgemäßen Schaumstoffe (Formverschäumung) kann es zwecks Erreichens optimaler Eigenschaften vorteilhaft sein, die Form zu überfüllen. Überfüllen bedeutet, eine Menge an schaumfähigem Gemisch einzufüllen, die in einer offenen Form nach dem kompletten Aufschäumen ein größeres Volumen einnehmen würde als das innere Volumen der Form ausmacht.

Die erfindungsgemäßen Schaumstoffe sind schwer entflammbar und besitzen niedrige dielektrische Verluste, die Feuchtebeständigkeit und Abriebfestigkeit sowie die Verarbeitbarkeit in Formen sind hervorragend.

Die Erfindung soll anhand der nachfolgenden Beispiele näher erläutert werden.

### Beispiele

In den nachfolgenden Beispielen beziehen sich alle Prozente auf Gewichtsprozente.

Die Messung der Rohdichten erfolgte an Schaumwürfeln (5 x 5 x 5 cm), die aus der Mitte der Schäume geschnitten wurden.

Die Messung der Druckfestigkeiten erfolgte gemäß DIN EN 826 an Schaumwürfeln (5 x 5 x 5 cm), die aus der Mitte der Schäume geschnitten wurden.

### Beispiel 1

800 g eines Gemisches aus 60% 2,4'-Diisocyanatodiphenylmethan und 40% 4,4'-Diisocyanatodiphenylmethan (NCO-Gehalt = 33,6%) wurden bei 50°C mit 200 g des Diglycidylethers von Bisphenol A (Epoxidzahl = 0,585) und 0,1 ml Dimethylbenzylamin gemischt und anschließend auf 120°C aufgeheizt. Die leicht exotherme Reaktion zeigte den sofortigen Beginn der Isocyanuratbildung an. Nach 2 Std. Reaktionszeit ohne externe Heizung wurde der Ansatz gekühlt. Dadurch stellte sich eine Innentemperatur von ca. 90°C ein. Dem Ansatz wurde eine Probe entnommen. Die Probe besitzt einen NCO-Gehalt von 23% NCO. Durch Zugabe von 1,07 g p-Toluolsulfonsäuremethylester wurde die Reaktion abgebrochen. Anschließend rührte man den Ansatz weitere 30 min bei 120°C. Es entstand ein bei 20°C flüssiges, klares, gelbes lagerstabiles Harz mit einer Viskosität bei 25°C von 2100 mPas und einem NCO-Gehalt von 21% (B-Zustand).

### Beispiel 2

100 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 5 g Polyetherpolyol (OH-Zahl 56 mg KOH/g, F = 2, hergestellt durch Propoxylierung von Propylenglykol), 2 g Polyetherpolysiloxan (Tegostab B 8411, Evonik) und 1 g N-[3-(Dimethylamino)propyl]formamid zugegeben. Direkt im Anschluß daran wurden 1,2 g Ameisensäure (98 - 100%) zugegeben und die Reaktionsmischung für weitere 10 s innig vermischt. Man ließ die Reaktionsmischung im Pappbecher aufschäumen. Der Schaum wurde für 4 h bei 200°C getempert.
Rohdichte: 50 kg/m³

### Vergleichsbeispiel 3

100 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 5 g Polyetherpolyol (OH-Zahl 56 mg KOH/g, F = 2, hergestellt durch Propoxylierung von Propylenglykol), 2 g Polyetherpolysiloxan (Tegostab B 8411, Evonik) und 1 g N-[3-(Dimethylamino)propyl]formamid zugegeben. Direkt im Anschluß daran wurden 1,0 g Wasser zugegeben und die Reaktionsmischung für weitere 10 s innig vermischt. Man ließ die Reaktionsmischung im Pappbecher aufschäumen. Der Schaum wurde für 4 h bei 200°C getempert.
Rohdichte: 48 kg/m³

### Vergleichsbeispiel 4

100 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 5 g Polyetherpolyol (OH-Zahl 56 mg KOH/g, F = 2, hergestellt durch Propoxylierung von Propylenglykol), 2 g Polyetherpolysiloxan (Tegostab B 8411, Evonik) und 1 g N-[3-(Dimethylamino)propyl]formamid zugegeben. Direkt im Anschluß daran wurden 10 g Solkane® 365/227 93/7 (Solvay Fluor GmbH) zugegeben und die Reaktionsmischung für weitere 10 s innig vermischt. Man ließ die Reaktionsmischung im Pappbecher aufschäumen. Der Schaum wurde für 4 h bei 200°C getempert.
Rohdichte: 48 kg/m³

**Tabelle 1:**

| | **Treibmittel** | **Rohdichte [kg/m³]** | **Druckfestigkeit [N/mm²]** | **Zellstruktur** |
|---|---|---|---|---|
| Beispiel 2 | Ameisensäure | 50 | 0,371 | sehr fein |
| Vergleich 3 | Wasser | 48 | 0,282 | fein |
| Vergleich 4 | Solkane® | 48 | 0,293 | fein |

Ein Vergleich der Druckfestigkeiten bei annähernd gleichen Rohdichten der Schäume zeigt den enormen Vorteil des erfindungsgemäßen Schaumstoffes gegenüber dem aus dem Stand der Technik bekannten wassergetriebenen Schaumstoff und dem mit Solkane® 365/227 93/7 getriebenen Schaumstoff. Der Einsatz physikalischer Treibmittel auf Basis fluorierter Kohlenwasserstoffe, wie z.B. Solkane® 365/227 93/7, ist aus dem Stand der Technik bekannt. Der erfindungsgemäße Schaumstoff besitzt eine um über 31 % bzw. 26% höhere Druckfestigkeit.

### Beispiel 5

1034,5 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 14,47 g Polyetherpolyol (OH-Zahl 400 mg KOH/g, F = 4, hergestellt durch Propoxylierung von o-Toluylendiamin), 20,7 g Polyetherpolysiloxan (Tegostab B 8485, Evonik) und 10,33 g N-[3-(Dimethylamino)propyl]formamid zugegeben. Direkt im Anschluß daran wurden 2,1 g Ameisensäure zugegeben und die Reaktionsmischung für weitere 10 s innig vermischt. Man überführte die Reaktionsmischung zum Aufschäumen in eine offene Pappform (20 x 20 x 14 cm). Der Schaum wurde für 4 h bei 200°C getempert.
Rohdichte: 148 kg/m³

### Beispiel 5a

Das Beispiel 5 wurde wiederholt. Das Polyetherpolyol (OH-Zahl 400 mg KOH/g, F = 4, hergestellt durch Propoxylierung von o-Toluylendiamin) wurde nicht eingesetzt. Es wurden 1,7 g Ameisensäure verwendet.
Rohdichte: 142 kg/m³

### Beispiel 6

1034,5 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 14,47 g Polyetherpolyol (OH-Zahl 400 mg KOH/g, F = 4, hergestellt durch Propoxylierung von o-Toluylendiamin), 20,7 g Polyetherpolysiloxan (Tegostab B 8485, Evonik) und 10,33 g N-[3-(Dimethylamino)propyl]formamid zugegeben. Direkt im Anschluß daran wurden 3,2 g Ameisensäure zugegeben und die Reaktionsmischung für weitere 10 s innig vermischt. Man überführte die Reaktionsmischung zum Aufschäumen in eine offene Pappform (20 x 20 x 14 cm). Der Schaum wurde für 4 h bei 200°C getempert.
Rohdichte: 86 kg/m³

### Beispiel 6a

Das Beispiel 6 wurde wiederholt. Das Polyetherpolyol (OH-Zahl 400 mg KOH/g, F = 4, hergestellt durch Propoxylierung von o-Toluylendiamin) würde nicht eingesetzt. Es wurden 4,2 g Ameisensäure verwendet.
Rohdichte: 90 kg/m³

### Vergleichsbeispiel 7 (Beispiel 5 aus DE 39 38 062 A1)

200 Gew.-Teile des Harzes aus Beispiel 1 wurden mit 2 Gew.-Teilen eines Katalysatorgemisches A und 1 Gew.-Teil Polyetherpolysiloxan (OS 20 Schaumstabilisator, Bayer AG) innig vermischt und bei Raumtemperatur stehen gelassen. Nachdem die Schaumkörper aufgetrieben und geliert waren (insgesamt 9 min), wurde die Rohdichte ermittelt.
Rohdichte: 142 kg/m³

Aus dem Rohschaumstoff wurden Platten 50 x 50 x 10 mm geschnitten und diese Platten im Heizschrank jeweils 4 Std. bei 80°C/120°C/160°C und 5 Std. bei 250°C getempert. Von diesen Schaumstoffproben wurden anschließend Druckfestigkeiten bei den angegebenen Temperaturen gemessen.
Druckfestigkeit bei 23°C: 0,90 N/mm²

Katalysatorgemisch A: Gemisch aus gleichen Gew.-Teilen Pentamethyl-diethylentriamin, N-Methyl-N'-dimethylaminoethyl-piperazin, N,N-Diethyl-ethanolamin und Silamorpholin, (wirkt gleichzeitig als Treibmittel T).

**Tabelle 2:**

| | **Treibmittel** | **Rohdichte [kg/m³]** | **Druckfestigkeit [N/mm²]** | **Zellstruktur** |
|---|---|---|---|---|
| Beispiel 5 | Ameisensäure | 148 | 2,38 | sehr fein |
| Beispiel 5a | Ameisensäure | 142 | 2,22 | sehr fein |
| Beispiel 6 | Ameisensäure | 86 | 0,91 | sehr fein |
| Beispiel 6a | Ameisensäure | 90 | 1,02 | sehr fein |
| Vergleich 7 | Kat.gemisch A | 142 | 0,90 | fein |

Ein Vergleich der Druckfestigkeiten bei gleichen oder annähernd gleichen Rohdichten der Schäume zeigt den enormen Vorteil des erfindungsgemäßen Schaumstoffes (Beispiele 5 und 5a) gegenüber dem aus dem Stand der Technik bekannten Schaumstoff (Vergleich 7). Der erfindungsgemäße Schaumstoff besitzt bei nur minimal höherer Rohdichte eine um über 140% bzw. 160% höhere Druckfestigkeit.

Ein Vergleich der Rohdichten bei ähnlichen Druckfestigkeiten der Schäume zeigt ebenfalls den enormen Vorteil des erfindungsgemäßen Schaumstoffes (Beispiele 6 und 6a) gegenüber dem aus dem Stand der Technik bekannten Schaumstoff (Vergleich 7). Der erfindungsgemäße Schaumstoff besitzt bei einer Rohdichte von 86 kg/m³ bzw. 90 kg/m³ eine Druckfestigkeit, die mit dem aus dem Stand der Technik bekannten Schaumstoff erst bei einer um 65% bzw. 50% höheren Rohdichte erreicht wird.

### Beispiel 8

100 g des Harzes aus Beispiel 1 wurden in einem Pappbecher (Durchmesser: 10 cm, Höhe: 24 cm) mittels eines Schnellrührers für 2 Minuten mit Luft beladen. Unter weiterem Rühren wurden 5 g Polyetherpolyol (OH-Zahl 56 mg KOH/g, F = 2, hergestellt durch Propoxylierung von Propylenglykol), 2 g Polyetherpolysiloxan (Tegostab B 8411, Evonik) und 1 g N-[3-(Dimethylamino)propyl]formamid zugegeben. Direkt im Anschluß daran wurden 1,0 g Ameisensäure zugegeben und die Reaktionsmischung für weitere 10 s innig vermischt. Man ließ die Reaktionsmischung im Pappbecher aufschäumen. Der Schaum wurde für 4 h bei 200°C getempert.
Rohdichte: 60 kg/m³

Es wurden die Druckfestigkeiten bei den angegebenen Temperaturen gemessen.

**Tabelle 3:**

| **Temperatur [°C]** | **Druckfestigkeit [N/mm²]** |
|---|---|
| 23 | 0,44 |
| 70 | 0,41 |
| 130 | 0,40 |
| 180 | 0,34 |
| 220 | 0,31 |

Diese Ergebnisse zeigen, dass nach dem erfindungsgemäßen Verfahren hochtemperaturstabile Schaumstoffe erhalten werden. Der Schaumstoff besitzt selbst bei 220°C noch über 70% der Druckfestigkeit bei Raumtemperatur.

## Patentansprüche

1. Hochtemperaturbeständige Schaumstoffe erhältlich durch Umsetzung von
a) mindestens einem organischen Polyisocyanat mit
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
e) gegebenenfalls in Gegenwart von Hilfs- und Zusatzstoffen,
**dadurch gekennzeichnet, dass** die Umsetzung in Gegenwart von Ameisensäure als Treibmittel und gegebenenfalls weiteren chemischen und/oder physikalischen Treibmitteln T) und einem die Isocyanat/Epoxid-Reaktion beschleunigenden Katalysator f) erfolgt.

2. Hochtemperaturbeständige Schaumstoffe gemäß Anspruch 1, **dadurch gekennzeichnet, dass** die Umsetzung in Gegenwart d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus erfolgt.

3. Hochtemperaturbeständige Schaumstoffe gemäß Anspruch 1 oder 2, **dadurch gekennzeichnet, dass** Ameisensäure als alleiniges Treibmittel verwendet wird.

4. Verfahren zur Herstellung hochtemperaturbeständiger Schaumstoffe gemäß Anspruch 1 durch Umsetzung von
a) mindestens einem organischen Polyisocyanat mit
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
e) gegebenenfalls in Gegenwart von Hilfs- und Zusatzstoffen,
**dadurch gekennzeichnet, dass** die Umsetzung in Gegenwart von Ameisensäure als Treibmittel und gegebenenfalls weiteren chemischen und/oder physikalischen Treibmitteln T) und einem die Isocyanat/Epoxid-Reaktion beschleunigenden Katalysator f) unter Aufschäumen durchgeführt wird.

5. Verfahren gemäß Anspruch 4 zur Herstellung hochtemperaturbeständiger Schaumstoffe gemäß Anspruch 2, **dadurch gekennzeichnet, dass** die Umsetzung in Gegenwart d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus durchgeführt wird.

6. Verfahren zur Herstellung hochtemperaturbeständiger Schaumstoffe gemäß Anspruch 1 oder 2 durch
(i) Reaktion von
a) mindestens einem organischen Polyisocyanat in Gegenwart
c) eines tertiären Amins als Katalysator zu einem Isocyanuratgruppen aufweisenden Zwischenprodukt, und
(ii) Abbruch der Reaktion unter Schritt (i) bei einer Umsetzung von maximal 60% der Isocyanatgruppen des Isocyanates a) durch Zugabe einer der Aminmenge c) mindestens äquivalenten Menge d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus, und
(iii) Mischen des unter (ii) erhaltenen Produktes mit
b) mindestens einer, mindestens zwei Epoxidgruppen aufweisenden organischen Verbindung in einer solchen Menge, die einem Äquivalentverhältnis von anfänglich eingesetzten Isocyanatgruppen zu Epoxidgruppen von 1,2 : 1 bis 500 : 1 entspricht,
e) gegebenenfalls in Gegenwart von Hilfs- und Zusatzstoffen
**dadurch gekennzeichnet, dass** die unter (iii) erhaltene Mischung durch (iv) Zugabe von Ameisensäure als Treibmittel und gegebenenfalls weiteren chemischen und/oder physikalischen Treibmitteln T) und einem die Isocyanat/Epoxid-Reaktion beschleunigenden Katalysator f) unter Aufschäumen in den geschäumten Zustand überführt wird.

7. Verfahren zur Herstellung hochtemperaturbeständiger Schaumstoffe gemäß Anspruch 1 oder 2 durch
(i) Mischen von
a) mindestens einem organischen Polyisocyanat und
b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2 : 1 bis 500 : 1 entspricht,
(ii) Reaktion der Mischung durch Zugabe
c) eines tertiären Amins als Katalysator zu einem Zwischenprodukt, und
(iii)Abbruch der Reaktion bei einer Umsetzung von maximal 60% der Isocyanatgruppen
des Isocyanates a) durch Zugabe einer der Aminmenge c) mindestens äquivalenten Menge d) eines Stabilisators aus der Gruppe bestehend aus organischen Sulfonsäureestern, Methyljodid, Dimethylsulfat, Benzolsulfonsäureanhydrid, Benzolsulfonsäurechlorid, Benzolsulfonsäure, Trimethylsilyltrifluormethansulfonat, dem Reaktionsprodukt der Umsetzung von Benzol-sulfonsäure mit Epoxiden sowie Mischungen daraus, so dass ein intermediärer stabiler B-Zustand des Viskositätsbereichs von 1500 bis 20000 mPas bei 25°C erhalten wird,
e) gegebenenfalls in Gegenwart von Hilfs- und Zusatzstoffen,
**dadurch gekennzeichnet, dass** die unter (iii) erhaltene Mischung durch Zugabe von Ameisensäure
als Treibmittel und gegebenenfalls weiteren chemischen und/oder physikalischen Treibmitteln T) und einem die Isocyanat/Epoxid-Reaktion beschleunigenden Katalysator f) unter Aufschäumen in den geschäumten Zustand überführt wird.

8. Verfahren gemäß einem der Ansprüche 4 - 7, **dadurch gekennzeichnet, dass** Ameisensäure als alleiniges Treibmittel verwendet wird.

9. Verfahren gemäß einem der Ansprüche 4 - 8, **dadurch gekennzeichnet, dass** nach dem Aufschäumen in den geschäumten Zustand eine nachträgliche Temperaturbehandlung zwischen 70 und 250°C vorgenommen wird.

10. Verwendung der hochtemperaturbeständigen Schaumstoffe gemäß den Ansprüchen 1 - 3 als Füllschaum für Hohlräume, als Füllschaum zur Elektroisolierung, als Kern von Sandwich-Konstruktionen, zur Herstellung von Konstruktionsmaterialien für Innen- und Außenanwendungen jeglicher Art, zur Herstellung von Konstruktionsmaterialien für den Fahrzeug-, Schiff-, Flugzeug- und Raketenbau, zur Herstellung von Flugzeuginnen- und-außenbauteilen, zur Herstellung von Dämmaterialien jeglicher Art, zur Herstellung von Dämmplatten, Rohr- und Behälterisolierungen, zur Herstellung von schallabsorbierenden Materialien, zum Einsatz in Motorräumen, zur Herstellung von Schleifscheiben und zur Herstellung von Hochtemperaturisolierungen und schwer entflammbaren Isolierungen.

11. Verwendung der schaumfähigen Mischungen vor dem Ende der Verschäumung zum hochtemperaturbeständigen Schaumstoff gemäß Ansprüchen 1 bis 3 zum Verkleben von Substraten, zum Verkleben von Stahl- und Kupferblechen, Kunststoffplatten und Polybutylenterephthalat-Platten.

12. Hohlräume, Elektroisolierungen, Kerne von Sandwich-Konstruktionen, Sandwich-Konstruktionen, Konstruktionsmaterialien für Innen- und Außenanwendungen jeglicher Art, Konstruktionsmaterialien für den Fahrzeug-, Schiff-, Flugzeug- und Raketenbau, Flugzeuginnen- und -außenbauteile, Dämmaterialien jeglicher Art, Dämmplatten, Rohr- und Behälterisolierungen, schallabsorbierende Materialien, Dämm- und Isoliermaterialien in Motorräumen, Schleifscheiben, Hochtemperaturisolierungen und schwer entflammbare Isolierungen, **dadurch gekennzeichnet, dass** sie die hochtemperaturbeständigen Schaumstoffe gemäß den Ansprüchen 1 - 3 enthalten oder aus ihnen bestehen.

13. Verklebungen von Substraten, Verklebungen von Stahl- und Kupferblechen, Kunststoffplatten
und Polybutylenterephthalat-Platten, **dadurch gekennzeichnet, dass** sie die hochtemperaturbeständigen Schaumstoffe gemäß Ansprüchen 1 bis 3 enthalten oder aus ihnen bestehen.

## Claims

1. High temperature resistant foams obtainable by reaction of
a) at least one organic polyisocyanate with
b) at least one organic compound having at least two epoxide groups, in such an amount as corresponds to an equivalent ratio of 1.2:1 to 500:1 for isocyanate groups to epoxide groups,
e) optionally in the presence of auxiliary and
additive agents,
**characterized in that** the reaction is carried out in the presence of formic acid as blowing agent and optionally further chemical and/or physical blowing agents T) and an isocyanate/epoxide reaction catalyst f).

2. High temperature resistant foams according to Claim 1, **characterized in that** the reaction is carried out in the presence d) of a stabilizer from the group consisting of organic sulfonic esters, methyl iodide, dimethyl sulfate, benzenesulfonic anhydride, benzenesulfonyl chloride, benzenesulfonic acid, trimethylsilyl trifluoromethanesulfonate, the reaction product of benzenesulfonic acid with epoxides and also mixtures thereof.

3. High temperature resistant foams according to Claim 1
or 2, **characterized in that** formic acid is used as sole blowing agent.

4. Process for producing high temperature resistant
foams according to Claim 1 by reaction of
a) at least one organic polyisocyanate with
b) at least one organic compound having at least two epoxide groups, in such an amount as corresponds to an equivalent ratio of 1.2:1 to 500:1 for isocyanate groups to epoxide groups,
e) optionally in the presence of auxiliary and
additive agents,
**characterized in that** the reaction is carried out in the presence of formic acid as blowing agent and optionally further chemical and/or physical blowing agents T) and an isocyanate/epoxide reaction catalyst f) with foaming.

5. Process according to Claim 4 for producing high
temperature resistant foams according to Claim 2, **characterized in that** the reaction is carried out in the presence d) of a stabilizer from the group consisting of organic sulfonic esters, methyl iodide, dimethyl sulfate, benzenesulfonic anhydride, benzenesulfonyl chloride, benzenesulfonic acid, trimethylsilyl trifluoromethanesulfonate, the reaction product of benzenesulfonic acid with epoxides and also mixtures thereof.

6. Process for producing high temperature resistant
foams according to Claim 1 or 2 by
(i) reaction of
a) at least one organic polyisocyanate in the presence of
c) a tertiary amine as catalyst to form an intermediate comprising isocyanurate groups, and
(ii) discontinuing the reaction under step (i) at a conversion of not more than 60% of the isocyanate groups of isocyanate a) by adding a stabilizer from the group consisting of organic sulfonic esters, methyl iodide, dimethyl sulfate, benzenesulfonic anhydride, benzenesulfonyl chloride, benzenesulfonic acid, trimethylsilyl trifluoromethanesulfonate, the reaction product of benzenesulfonic acid with epoxides and also mixtures thereof in an amount d) which is at least equivalent to the amine quantity c), and
(iii) mixing the product obtained under (ii) with
b) at least one organic compound having at least two epoxide groups, in such an amount as corresponds to an equivalent ratio of 1.2:1 to 500:1 for initially used isocyanate groups to epoxide groups,
e) optionally in the presence of auxiliary
and additive agents,
**characterized in that** the mixture obtained under (iii) is converted by (iv) addition of formic acid as blowing agent and optionally further chemical and/or physical blowing agents T) and of an isocyanate-epoxide reaction catalyst f) with foaming into the foamed state.

7. Process for producing high temperature resistant
foams according to Claim 1 or 2 by
(i) mixing of
a) at least one organic polyisocyanate with
b) at least one organic compound having at least two epoxide groups, in such an amount as corresponds to an equivalent ratio of 1.2:1 to 500:1 for isocyanate groups to epoxide groups,
(ii) reacting the mixture by addition of
c) a tertiary amine as catalyst to form an intermediate, and
(iii) discontinuing the reaction at a conversion of not more than 60% of the isocyanate groups of isocyanate a) by adding a stabilizer from the group consisting of organic sulfonic esters, methyl iodide, dimethyl sulfate, benzenesulfonic anhydride, benzenesulfonyl chloride, benzenesulfonic acid, trimethylsilyl trifluoromethanesulfonate, the reaction product of benzenesulfonic acid with epoxides and also mixtures thereof in an amount d) which is at least equivalent to the amine quantity c), and so obtaining an intermediate stable B-state of the viscosity range from 1500 to 20 000 mPas at 25°C,
e) optionally in the presence of auxiliary
and additive agents,
**characterized in that** the mixture obtained under (iii) is converted by addition of formic acid as blowing agent and optionally further chemical and/or physical blowing agents T) and of an isocyanate-epoxide reaction catalyst f) with foaming into the foamed state.

8. Process according to any of Claims 4-7, **characterized**
**in that** formic acid is used as sole blowing agent.

9. Process according to any of Claims 4-8, **characterized**
**in that** the foaming into the foamed state is followed by a subsequent thermal treatment between 70 and 250°C.

10. Use of high temperature resistant foams according to
Claims 1-3 as a filling foam for cavities, as a filling foam for electrical insulation, as a core of sandwich structures, for producing engineering materials for indoor and outdoor applications of any kind, for producing construction materials for vehicle, ship, aircraft and rocket building, for producing aircraft interior and exterior parts, for producing insulating materials of any kind, for producing insulating panels, pipe and container insulations, for producing sound-absorbing materials, for use in engine compartments, for producing abrasive disks and for producing high temperature resistant insulation and flame retardant insulation.

11. Use of foamable mixtures before the end of foaming into the high temperature resistant foam according to Claims 1 to 3 for bonding substrates, for bonding steel and copper sheets, plastics sheets and polybutylene terephthalate sheets.

12. Cavities, electrical insulations, cores of sandwich
structures, sandwich structures, engineering materials for indoor and outdoor applications of any kind, engineering materials for vehicle, ship, aircraft and rocket building, aircraft interior and exterior parts, insulating materials of any kind, insulating panels, pipe and container insulations, sound-absorbing materials, insulating and isolating materials in engine compartments, abrasive disks, high-temperature resistant insulations and flame retardant insulations, **characterized in that** they contain or consist of the high temperature resistant foams according to Claims 1-3.

13. Adhesive bonds to substrates and adhesive bonds to
steel and copper sheets, to plastics sheets and to polybutylene terephthalate sheets, **characterized in that** they contain or consist of the high temperature resistant foams according to Claims 1 to 3.

## Revendications

1. Mousses résistantes aux hautes températures, pouvant être obtenues par réaction
a) d'au moins un polyisocyanate organique, avec
b) au moins un composé organique, comportant au moins deux groupes époxyde, en une quantité qui corresponde à un rapport entre équivalents groupes isocyanate/groupes époxyde de 1,2:1 à 500:1,
e) éventuellement en présence d'adjuvants et
d'additifs,
**caractérisées en ce que** la réaction a lieu en présence d'acide formique en tant qu'agent porogène, et éventuellement en présence d'autres agents porogènes T) chimiques et/ou physiques, et d'un catalyseur f) accélérant la réaction isocyanate/époxyde.

2. Mousses résistantes aux hautes températures selon la revendication 1, **caractérisées en ce que** la réaction a lieu en présence d) d'un stabilisant du groupe consistant en les esters organiques d'acides sulfoniques, l'iodure de méthyle, le sulfate de diméthyle, l'anhydride benzènesulfonique, le chlorure de benzènesulfonyle, l'acide benzènesulfonique, le trifluorométhanesulfonate de triméthylsilyle, le produit de la réaction de l'acide benzènesulfonique avec des époxydes, ainsi que les mélanges de ceux-ci.

3. Mousses résistantes aux hautes températures selon la revendication 1 ou 2, **caractérisées en ce que** l'acide formique est utilisé en tant qu'agent porogène unique.

4. Procédé de fabrication de mousses résistantes aux hautes températures selon la revendication 1, par réaction
a) d'au moins un polyisocyanate organique, avec
b) au moins un composé organique, comportant au moins deux groupes époxyde, en une quantité qui corresponde à un rapport entre équivalents groupes isocyanate/groupes époxyde de 1,2:1 à 500:1,
e) éventuellement en présence d'adjuvants et
d'additifs,
**caractérisé en ce que** la réaction est mise en oeuvre en présence d'acide formique en tant qu'agent porogène et éventuellement d'autres agents porogènes T) chimiques et/ou physiques et d'un catalyseur f) accélérant la réaction isocyanate/époxyde, avec expansion.

5. Procédé selon la revendication 4 pour la préparation de mousses résistantes aux hautes températures selon la revendication 2, **caractérisé en ce que** la réaction est mise en oeuvre en présence d) d'un stabilisant du groupe consistant en les esters organiques d'un acide sulfonique, l'iodure de méthyle, le sulfate de diméthyle, l'anhydride benzènesulfonique, le chlorure de benzènesulfonyle, l'acide benzènesulfonique, le trifluorométhanesulfonate de triméthylsilyle, le produit de la réaction de l'acide benzènesulfonique avec des époxydes, et les mélanges de ceux-ci.

6. Procédé de fabrication de mousses résistantes aux hautes températures selon la revendication 1 ou 2, par
(i) réaction
a) d'au moins un polyisocyanate organique,
c) en présence d'une amine tertiaire servant de catalyseur, pour donner un produit intermédiaire comportant un groupe isocyanurate, et
(ii) interruption de la réaction de l'étape (i) pour un taux de conversion au maximum de 60 % des groupes isocyanate de l'isocyanate a), par addition d'une quantité au moins équivalente à la quantité d'amine c), d) d'un stabilisant du groupe consistant en les esters organiques d'un acide sulfonique, l'iodure de méthyle, le sulfate de diméthyle, l'anhydride benzènesulfonique, le chlorure de benzènesulfonyle, l'acide benzènesulfonique, le trifluorométhanesulfonate de triméthylsilyle, le produit de la réaction de l'acide benzènesulfonique avec des époxydes, et les mélanges de ceux-ci, et
(iii) mélange du produit obtenu en (ii)
b) à au moins un composé organique, comportant au moins deux groupes époxyde, en une quantité qui corresponde à un rapport entre équivalents, entre les groupes isocyanate initialement utilisés et les groupes époxyde, de 1,2:1 à 500:1,
e) éventuellement en présence d'adjuvants et
d'additifs,
**caractérisé en ce que** le mélange obtenu en (iii) est converti à l'état expansé par (iv) addition d'acide formique en tant qu'agent porogène et éventuellement d'autres agents porogènes T) chimiques et/ou physiques et/ou d'un catalyseur f) accélérant la réaction isocyanate/époxyde, avec expansion.

7. Procédé de fabrication de mousses résistantes aux hautes températures selon la revendication 1 ou 2, par
(i) mélange
a) d'au moins un polyisocyanate organique, et
b) d'au moins un composé organique comportant au moins deux groupes époxydes, en une quantité qui corresponde à un rapport entre équivalents, entre les groupes isocyanate et les groupes époxydes, de 1,2:1 à 500:1,
(ii) réaction du mélange par addition
c) d'une amine tertiaire en tant que catalyseur pour donner un produit intermédiaire, et
(iii) interruption de la réaction pour un taux de conversion au maximum de 60 % des groupes isocyanate de l'isocyanate a) par addition d'une quantité au moins équivalente à la quantité d'amine c), d) d'un stabilisant du groupe consistant en les esters organiques d'un acide sulfonique, l'iodure de méthyle, le sulfate de diméthyle, l'anhydride benzènesulfonique, le chlorure de benzènesulfonyle, l'acide benzènesulfonique, le trifluorométhanesulfonate de triméthylsilyle, le produit de la réaction de l'acide benzènesulfonique avec des époxydes, ainsi que les mélanges de ceux-ci, de façon à obtenir un état B stable intermédiaire correspondant à une plage de viscosité de 1500 à 20 000 mPa.s à 25°C, e) éventuellement en présence d'adjuvants et
d'additifs,
**caractérisé en ce que** le mélange obtenu en (iii) est converti à l'état expansé par addition d'acide formique en tant qu'agent porogène et éventuellement d'autres agents porogènes T) chimiques et/ou physiques, et d'un catalyseur f) accélérant la réaction isocyanate/époxyde, avec expansion.

8. Procédé selon l'une des revendications 4 à 7, **caractérisé en ce que** l'acide formique est utilisé en tant qu'agent porogène unique.

9. Procédé selon l'une des revendications 4 à 8, **caractérisé en ce que**, après expansion conduisant à l'état expansé, on procède à un traitement thermique supplémentaire entre 70 et 250°C.

10. Utilisation des mousses résistantes aux hautes températures selon les revendications 1 à 3 en tant que mousses de remplissage pour cavités, en tant que mousses de remplissage pour isolation électrique, en tant qu'âme pour des constructions sandwich, pour la fabrication de matériaux de construction pour applications en intérieur et en extérieur de tous types, pour la fabrication de matériaux de construction pour la construction automobile, navale, aéronautique et pour la construction de fusées, pour la fabrication de composants intérieurs et extérieurs pour avions, pour la fabrication de matériaux isolants de tous types, pour la fabrication de panneaux isolants, d'isolations pour tubes et récipients, pour la fabrication de matériaux insonorisants, pour une utilisation dans des compartiments moteur, pour la fabrication de disques abrasifs et pour la fabrication d'isolations à hautes températures et d'isolations difficilement inflammables.

11. Utilisation des mélanges expansibles avant la fin de l'expansion conduisant à une mousse résistante aux hautes températures selon les revendications 1 à 3 pour coller des substrats, pour coller des tôles d'acier et de cuivre, des plaques en plastique et des panneaux en poly(téréphtalate de butylène).

12. Cavités, isolations électriques, âmes pour des constructions sandwich, constructions sandwich, matériaux de construction pour applications en intérieurs et en extérieurs de tous types, matériaux de construction pour l'industrie automobile, navale, aéronautique et pour la construction de fusées, composants intérieurs et extérieurs pour avions, matériaux isolants de tous types, panneaux isolants, isolations pour tubes et récipients, matériaux insonorisants, matériaux absorbants et isolants dans le compartiments moteur, disques abrasifs, isolations haute température et isolations difficilement inflammables, **caractérisés en ce qu'**ils contiennent les mousses résistantes aux hautes températures selon les revendications 1 à 3 ou en sont constitués.

13. Assemblages collés de substrats, assemblages collés de tôles d'acier et de cuivre, de panneaux plastiques et de panneaux en poly (téréphtalate de butylène, **caractérisés en ce qu'**ils contiennent les mousses résistantes aux hautes températures selon les revendications 1 à 3 ou en sont constitués.
